# EUROPÄISCHE PATENTSCHRIFT

(11) **EP 1 881 586 B1**
(45) Veröffentlichungstag und Bekanntmachung des Hinweises auf die Patenterteilung: **20.01.2010**
(21) Anmeldenummer: 06117330.8
(22) Anmeldetag: 17.07.2006
(51) Int. Cl.: H02K 9/19, H02K 7/20, F02B 63/04, H02K 7/00, H02K 9/14

(54) **Kühlsystem insbesondere für ein Fahrzeug**
Cooling system particularly for a vehicle
Système de refroidissement notamment pour un véhicule

(43) Veröffentlichungstag der Anmeldung: 23.01.2008
(73) Patentinhaber: IG EL Ingenieurgemeinschaft Erich Leitner AG, 85560 Ebersberg (DE)
(72) Erfinder: Ströse, Jörg, 85614, Eglharting (DE); Wolf, Rainer, 85598, Baldham (DE)
(74) Vertreter: Peckmann, Ralf

(56) Entgegenhaltungen:
- WO-A-03/046350
- DE-A1- 19 953 857

## Beschreibung

Die vorliegende Erfindung betrifft ein Kühlsystem, insbesondere für ein Fahrzeug, mit zumindest einer elektrischen Maschine, einer ersten und zweiten Antriebseinrichtung, einer Fördereinrichtung und einer steuerbaren Kopplungseinrichtung.

Derartige elektrische Maschinen, wie beispielsweise Generatoren zur Erzeugung von Strom für ein Bordnetz eines Fahrzeugs, werden üblicherweise durch einen Luftstrom gekühlt, welcher von einem Flügelrad auf der Welle des Generators gefördert wird.

Elektrische Maschinen mit höherer Leistung werden zunehmend für Fahrzeuge eingesetzt, die eine Vielzahl von Verbrauchern aufweisen. Der Kühlbedarf einer solchen elektrischen Maschine wird dabei durch eine Flüssigkeitskühlung gedeckt, bei der eine erzwungene Strömung durch eine Pumpe erzeugt wird.

Die Druckschrift DE 41 06 497 C2 beschreibt einen Stromerzeuger mit einer Flüssigkeitskühlung für ein Sportboot, wobei ein Verbrennungsmotor den Stromerzeuger und eine Pumpe antreibt, welche zusammen fluchtend angeordnet sind. Der von der Pumpe geförderte Flüssigkeitsstrom umströmt diese und den Generator. Eine dreigeteilte Welle dient zum Antrieb der Pumpe und des Generators, wobei die Wellenteile untereinander mit einem Konuspasssitz gekoppelt sind.

Als nachteilig hat sich jedoch dabei die Tatsache herausgestellt, dass die Kühlmittelpumpe mit der Motordrehzahl angetrieben wird, die in Abhängigkeit vom Einsatz des Motors Schwankungen unterworfen ist. Folglich ist eine kontinuierliche Kühlung des Generators nicht gegeben.

Bei Fahrzeugkühlsystemen werden zunehmend elektrische Kühlmittelpumpen eingesetzt, die unabhängig von der Drehzahl des Fahrzeugmotors antreibbar und steuerbar sind. Diese elektrischen Kühlmittelpumpen sind zum Teil zusätzlich zu einer üblichen Wasserpumpe oder an deren Stelle, beispielsweise im Motorraum des Fahrzeugs, eingebaut und halten einen Kühlmittelkreislauf auch bei ausgestelltem Fahrzeugmotor aufrecht, um beispielsweise weiter Wärme von zu heißen Bauteilen abzuführen. Dadurch wird einerseits eine Beschädigung dieser Bauteile vermieden und andererseits deren Restwärme zur Heizung des Fahrgastraums genutzt.

Hierbei hat sich jedoch als nachteilig herausgestellt, dass zusätzliche Kühlmittelpumpen Einbauraum sowie elektrischen und hydraulischen Installationsmehraufwand benötigen und zusätzliche Kosten verursachen.

Die DE 199 53 857 A1 beschreibt eine Betriebsvorrichtung, insbesondere zum Betreiben von Fahrzeugen, mit mehreren Komponenten, welche zumindest eine sowohl als Generator als auch als Antriebseinrichtung in Form eines Elektromotors betreibbare elektrische Maschine sowie ein thermisches Aggregat zur Umwandlung von mechanischer Energie in Wärmeenergie umfassen. Die Komponenten umfassen zusätzlich eine Verbrennungsmaschine als weitere Antriebseinrichtung, insbesondere einen Ottomotor oder Dieselmotor. Die Komponenten sind mechanisch miteinander koppelbar, wobei die mechanischen Verbindungen jeweils durch einen Kupplungseinrichtung wahlweise herstellbar oder lösbar sind. Weiterhin ist eine Kühleinrichtung vorgesehen, wobei zumindest ein beweglicher Teil dieser Kühleinrichtung, insbesondere eine Fördereinrichtung für ein Kühlfluid, mit einer der Komponenten, bevorzugt mit der elektrischen Maschine, mechanisch gekoppelt ist.

Die DE 199 53 857 A1 offenbart ein Kühlsystem, insbesondere für ein Fahrzeug, mit zumindest einer elektrischen Maschine; einer ersten Antriebseinrichtung zum Antrieb der zumindest einen elektrischen Maschine; einer Fördereinrichtung, welche einen Kühlmittelstrom fördert, welcher zur Kühlung der zumindest einen elektrischen Maschine vorgesehen ist; einer zweiten Antriebseinrichtung, welche die Fördereinrichtung antreibt; und einer steuerbaren Kopplungseinrichtung zur steuerbaren Kopplung der ersten Antriebseinrichtung mit der Fördereinrichtung, wobei die erste Antriebseinrichtung die Fördereinrichtung antreibt.

Die Aufgabe der vorliegenden Erfindung besteht daher darin, ein Kühlsystem zu schaffen, welches die oben genannten Nachteile auf einfache und kostengünstige Weise beseitigt.

Diese Aufgabe wird erfindungsgemäß durch ein Kühlsystem mit den Merkmalen des Anspruchs 1 gelöst.

Die der vorliegenden Erfindung zugrunde liegenden Idee besteht darin, ein Kühlsystem, insbesondere eines Fahrzeugs, mit zumindest einer elektrischen Maschine; einer ersten Antriebseinrichtung zum Antrieb der zumindest einen elektrischen Maschine; einer Fördereinrichtung welche einen Kühlmittelstrom (20) fördert, welcher zur Kühlung der zumindest einen elektrischen Maschine vorgesehen ist; einer zweiten Antriebseinrichtung, welche die Fördereinrichtung in einem ersten Betriebsbereich, in welchem die elektrische Maschine mit einer für sie durchschnittlichen normalen Belastung arbeitet, antreibt; und einer steuerbaren Kopplungseinrichtung zur steuerbaren Kopplung der ersten Antriebseinrichtung mit der Fördereinrichtung, wobei die steuerbare Kopplungseinrichtung elektrisch steuerbar ausgebildet ist und einen Elektromagnet, welcher die steuerbare Kopplungseinrichtung in mit Strom beaufschlagten Zustand elektromagnetisch gegen die Kraft eines Federspeichers in dem ersten Betriebsbereich auskuppelt, und einen Federspeicher aufweist, der im stromlosen Zustand ständig ohne elektrischen Energieaufwand die steuerbare Kupplungseinrichtung in dem zweiten Betriebsbereich eingekuppelt hält, wobei die erste Antriebseinrichtung die Fördereinrichtung in einem zweiten Betriebsbereich, in welchem eine hohe Belastung der elektrischen Maschine und auch der ersten Antriebseinrichtung vorhanden ist, antreibt, vorzusehen.

Hiermit wird vorteilhaft erreicht, dass die Fördereinrichtung einerseits mit der zweiten Antriebseinrichtung unabhängig von der ersten Antriebseinrichtung in einem ersten Betriebsbereich antreibbar und steuerbar ist. Andererseits ist die Fördereinrichtung über die steuerbare Kopplungseinrichtung mit der ersten Antriebseinrichtung koppelbar, um in einem zweiten Betriebsbereich die Leistung der ersten Antriebseinrichtung vorteilhaft auszunutzen.

Die erste Antriebseinrichtung ist zum Beispiel die Verbrennungskraftmaschine des Fahrzeugs, welche die elektrische Maschine, einen Generator, antreibt. Die zweite Antriebseinrichtung ist beispielsweise ein Elektromotor.

Auf diese Weise wird ein Kühlsystem mit dem Vorteil eines in einem sehr weiten Betriebsbereich einstellbaren Kühlmittelstroms auf einfache und kostengünstige Weise geschaffen.

Ebenfalls kann ein Restwärmestau bei ausgestellter Verbrennungskraftmaschine des Fahrzeugs vermieden werden.

Vorteilhafte Ausbildungen und Verbesserungen der Erfindung sind in den Unteransprüchen angegeben.

In einer bevorzugten Ausführung ist vorgesehen, dass die zumindest eine elektrische Maschine, die Fördereinrichtung, die Kopplungseinrichtung und die zweite Antriebseinrichtung für eine Umströmung mit dem Kühlmittelstrom zur Kühlung in einem gemeinsamen Gehäuse angeordnet sind. Daraus ergibt sich eine vorteilhaft kompakte Bauweise für die elektrische Maschine, die zum Beispiel ein Generator oder Starter-Generator des Fahrzeugs ist. Eine zusätzliche Installation für eine Energiezufuhr für die Antriebseinrichtung der Fördereinrichtung ist vorteilhaft innerhalb des gemeinsamen Gehäuses angeordnet und somit nicht zusätzlich von außen erforderlich. Es ergibt sich eine vorteilhafte Platzersparnis. Auch eine vorteilhafte Geräuschreduzierung wird erreicht.

Erfindungsgemäß ist vorgesehen, dass die steuerbare Kopplungseinrichtung im ersten Betriebsbereich ausgekuppelt ist. Dadurch ist ein Antrieb der Fördereinrichtung durch die zweite Antriebseinrichtung vorteilhaft unabhängig von der ersten Antriebseinrichtung ermöglicht.

Erfindungsgemäß ist weiterhin vorgesehen, dass die steuerbare Kopplungseinrichtung im stromlosen Zustand und im zweiten Betriebsbereich eingekuppelt ist. Hieraus ergibt sich der Vorteil, dass im Fall eines Stromausfalls im Bereich der Steuerung der Kopplungseinrichtung bzw. der zweiten Antriebseinrichtung die steuerbare Kopplungseinrichtung die Fördereinrichtung mit der ersten Antriebseinrichtung, zum Beispiel mit dem in diesem Falle laufenden Verbrennungsmotor des Fahrzeugs, koppelt und somit eine Förderung des Kühlmittelstroms und dadurch des Kühlsystems vorteilhaft sicherstellt. Weiterhin ist es dadurch vorteilhaft möglich, die Fördereinrichtung in einem zweiten Betriebsbereich, der erhöhte Förderleistung erfordert, mit der ersten Antriebseinrichtung zu koppeln. Somit kann die zweite Antriebseinrichtung vorteilhaft platzsparend für den Normalbetrieb ausgelegt werden, während für Hochlastbetrieb die erste Antriebseinrichtung vorteilhaft verwendet wird.

In einer weiteren Ausführung ist vorgesehen, dass die steuerbare Kopplungseinrichtung mit der ersten Antriebseinrichtung über ein Getriebe gekoppelt ist. Dadurch ist eine vorteilhafte Drehzahlanpassung zwischen einer hohen Drehzahl der ersten Antriebseinrichtung und einer erforderlich niedrigeren Drehzahl der Fördereinrichtung möglich.

Es ist besonders bevorzugt, dass die Fördereinrichtung durch die zweite Antriebseinrichtung im ersten Betriebsbereich zur Steuerung des Kühlmittelstroms einstellbar ist. Dadurch ist eine vorteilhafte Kühlungsregelung, zum Beispiel über die Drehzahl der Fördereinrichtung und somit über den Kühlmittelstrom ermöglicht.

In einer weiteren Ausführung ist die zweite Antriebseinrichtung im zweiten Betriebsbereich in einen deaktivierten Betriebszustand umschaltbar. Eine Deaktivierung ergibt vorteilhaft, dass die zweite Antriebseinrichtung nicht zusätzlich Energie verbraucht und/oder eine bremsende Wirkung ausübt.

In einer noch weiteren Ausführung ist die zweite Antriebseinrichtung im zweiten Betriebsbereich in einen Betriebszustand als Motor oder in einen Betriebszustand als Generator umschaltbar. Ist die zweite Antriebseinrichtung, die zum Beispiel ein Elektromotor ist, in diesem Fall als Motor geschaltet, so kann dieser hierbei in geeigneter Weise zusätzlich zu der ersten Antriebseinrichtung als zweite Antriebseinrichtung die Fördereinrichtung unterstützend antreiben. Schließlich kann die zweite Antriebseinrichtung als Generator geschaltet werden, wobei sie vorteilhaft zusätzliche Energie liefert.

In weiterer Ausführung ist es bevorzugt, dass das Kühlsystem eine Steuereinheit zur Steuerung der elektrischen Maschine, der Fördereinrichtung und der steuerbaren Kopplungseinrichtung aufweist. Somit kann eine zusätzliche Kabelinstallation im Fahrzeug vorteilhaft entfallen. Hierbei ist es weiterhin von Vorteil, dass die Steuereinheit eine Schnittstelle zur Verbindung mit einer übergeordneten Steuereinrichtung des Fahrzeugs aufweist, wodurch eine vorteilhafte Einbindung des Kühlsystems zum Beispiel in das Motormanagement ermöglicht ist.

Einen besonderen Platzvorteil bietet die Ausführung, in welcher die Steuereinheit in der elektrischen Maschine angeordnet ist. Hierzu kann vorteilhaft eine schon vorhandene Steuerung der elektrischen Maschine verwendet bzw. erweitert werden.

In einer noch weiteren Ausführung ist vorgesehen, dass die Steuereinheit mit Temperatursensoren in Verbindung steht, die in dem Gehäuse, in der zumindest einen elektrischen Maschine und/oder in der zweiten Antriebseinrichtung angeordnet sind. Somit ist vorteilhaft eine individuelle Temperaturregelung von beispielsweise der elektrischen Maschine, der Wellenlagerungen, der Fördereinrichtung und des Kühlmittels ermöglicht.

Eine weitere Ausführung sieht vor, dass das Gehäuse zumindest einen zusätzlichen Einlass und zumindest einen zusätzlichen Auslass für Kühlmittel aufweist. Dadurch ist der Einsatzbereich des Kühlsystems, zum Beispiel auch als zusätzlicher Wärmelieferant, vorteilhaft erweitert.

In einer weiteren Ausführung ist dazu vorgesehen, dass der zumindest eine zusätzliche Einlass und/oder der zumindest eine zusätzliche Auslass durch einen Thermostat gesteuert ausgebildet sind. Daraus ergibt sich der Vorteil, dass in der Warmlaufphase einer Verbrennungskraftmaschine das Kühlmittel unter Umgehung eines Wärmetauschers mit höherer Temperatur der Verbrennungskraftmaschine zur schnelleren Erwärmung zuführbar ist.

Die Lager der elektrischen Maschine und auch die Lager der Fördereinrichtung können wärmeempfindliche Bauteile aufweisen und müssen entsprechend dimensioniert werden. In einer weiteren bevorzugten Ausführung sind erste Wellenlager einer ersten Antriebswelle und/oder zweite Wellenlager einer zweiten Antriebswelle für eine Umströmung mit dem Kühlmittelstrom zur Kühlung vorgesehen. Auf diese Weise wird vorteilhaft eine ständige Kühlung der betreffenden Lager bei Betrieb gewährleistet, wodurch sich deren Lebensdauer und Zuverlässigkeit vorteilhaft erhöht. Auch eine Dimensionierung derselben kann somit in bestimmten Bereichen vorteilhaft innerhalb bestimmter Grenzen bleiben, wodurch ein Platzvorteil geschaffen ist.

In einer besonders bevorzugten Ausführung ist das Kühlsystem Bestandteil eines Fahrzeugkühlsystems. Hier ergibt sich der Vorteil, dass eine übliche Wasserpumpe der Verbrennungskraftmaschine entfallen kann, wobei die Temperaturregelung der Verbrennungskraftmaschine über eine Steuerung der Fördereinrichtung inklusive der steuerbaren Kopplungseinrichtung ermöglicht ist. Daraus ergibt sich weiterhin eine vorteilhafte Platzersparnis.

Die elektrische Maschine des erfindungsgemäßen Kühlsystems kann als Starter-Generator ausgebildet sein.

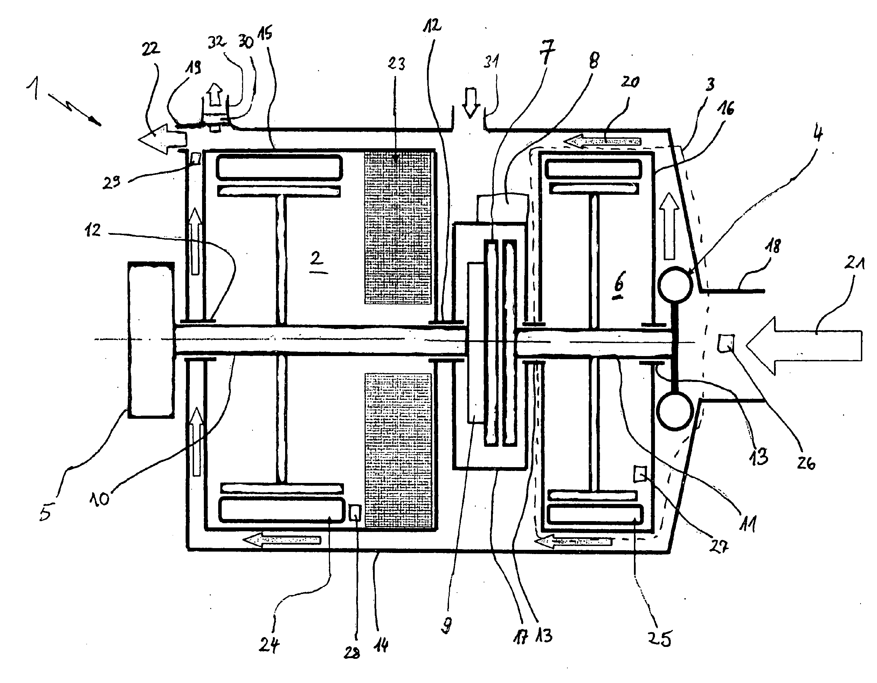

Die Erfindung wird im Folgenden anhand von Ausführungsbeispielen unter Bezugnahme auf die beiliegende Figur der Zeichnung näher erläutert, welche schematisch eine beispielhafte Ausführung eines erfindungsgemäßen Kühlsystems und einer erfindungsgemäßen elektrischen Maschine illustriert.

Ein beispielhaftes Kühlsystem 1 wird in der Figur in einer schematischen Schnittansicht mit einer elektrischen Maschine 2 dargestellt.

Ein Gehäuse 14 umschließt in diesem Ausführungsbeispiel eine elektrische Maschine 2, eine steuerbare Kopplungseinrichtung 7 und eine Fördereinrichtung 3, die fluchtend hintereinander angeordnet sind. Das Gehäuse 14 weist auf der rechten Seite der Figur einen Einlass 18 für einen Zufluss 21 eines Kühlmittels auf, welches hier eine Flüssigkeit, zum Beispiel Kühlwasser mit bestimmten Zusätzen, zur Kühlung einer Verbrennungskraftmaschine eines Fahrzeugs ist. Die Strömungsrichtung des Kühlmittels ist mit Pfeilen als Kühlmittelstrom 20 angegeben, welcher die Fördereinrichtung 3, die steuerbare Kopplungseinrichtung 7 und die elektrische Maschine 2 umströmt und aus einem Auslass 19 aus dem Gehäuse 14 als ein Abfluss 22 wieder ausströmt.

Das Gehäuse 14 kann einstückig, aber auch mehrstückig ausgebildet sein, oder sich aus mehreren Einzelgehäusen zusammensetzen.

Der Einlass 18 und der Auslass 19 des Gehäuses 14 sind in diesem Beispiel an ein (nicht gezeigtes) Motorkühlsystem des Fahrzeugs angeschlossen.

In dem gezeigten Ausführungsbeispiel ist die elektrische Maschine 2 ein Generator zur Stromerzeugung für ein Bordnetz des Fahrzeugs. Diese elektrische Maschine 2 weist ein erstes Gehäuse 15 mit einer ersten Wicklung 24 und einer Steuereinheit 23, die weiter unten noch ausführlicher beschrieben wird, auf. Die erste Wicklung 24 ist nur schematisch dargestellt und umgibt einen Anker, der auf einer ersten Antriebswelle 10 befestigt ist. Die erste Antriebswelle 10 durchquert das erste Gehäuse 15 und ist in ihm über erste Wellenlager 12 drehbar gelagert. Auf die Funktionsweise dieses Generators wird nicht weiter eingegangen.

Das in der Figur auf der linken Seite befindliche Ende der ersten Antriebswelle 10 ist mit einer ersten Antriebseinrichtung 5 verbunden. Diese ist nur schematisch dargestellt. In diesem Beispiel ist die erste Antriebseinrichtung 5 die Verbrennungskraftmaschine des Fahrzeugs. Die Kopplung ihres Kurbelwellenabtriebs mit der ersten Antriebswelle 10 kann zum Beispiel über einen Riementrieb erfolgen.

Das andere Ende der ersten Antriebswelle 10 ist mit der steuerbaren Kopplungseinrichtung 7 verbunden, wobei es in diesem Beispiel mit einem Getriebe 9 gekoppelt ist. Die steuerbare Kopplungseinrichtung 7 weist ein Kopplungsgehäuse 17 auf, in welchem neben dem Getriebe 9 eine nicht näher detaillierte Kupplung schematisch angedeutet ist. Diese Kupplung ist mit einem Kopplungsantrieb 8 zum Ein- und Auskuppeln der Kupplung verbunden. Ein Kupplungsabtrieb auf der rechten Seite ist mit einem linken Ende einer zweiten Antriebswelle 11 der Fördereinrichtung 3 verbunden.

Die zweite Antriebswelle 11 ist in einem zweiten Gehäuse 16 der Fördereinrichtung 3 über zweite Wellenlager 13 drehbar gelagert und mit einem nicht näher detaillierten Anker drehfest verbunden, der von einer schematisch gezeigten zweiten Wicklung 25 umgeben ist. Dieser Aufbau bildet eine zweite Antriebseinrichtung 6, die in diesem Beispiel ein elektrischer Motor ist, dessen Funktion nicht weiter erläutert wird. An dem in der Figur rechts angeordneten Ende der zweiten Antriebswelle 11 ist ein Förderrad 4 drehfest angebracht. Das Förderrad 4 ist beispielsweise ein Pumpenlaufrad einer Kreiselpumpe und für einen bestimmten Drehzahlbereich und eine bestimmte Fördermenge ausgelegt.

Es ist selbstverständlich, dass die hier gezeigten Lagerungen 12, 13 und Gehäuse 15, 16, 17 innerhalb des Gehäuses 14 gegenüber dem Kühlmittelstrom 20 in geeigneter Weise durch Dichtmittel abgedichtet sind, auf die hier nicht weiter eingegangen wird. Die Wellenlager 12, 13 sind so angeordnet, dass sie vom Kühlmittelstrom 20 umströmt werden, wobei eine Wärmeübertragung stattfindet.

Im Folgenden wird die Funktionsweise des Kühlsystems 1 gemäß dem vorliegenden Ausführungsbeispiel näher beschrieben.

In einem normalen Betriebsbereich, der als erster Betriebsbereich bezeichnet wird, arbeitet die elektrische Maschine 2 mit einer für sie durchschnittlichen normalen Belastung. Die elektrische Maschine 2 wird dabei von der ersten Antriebseinrichtung 5 bei Betrieb der Verbrennungskraftmaschine des Fahrzeugs kontinuierlich aber mit veränderlicher Drehzahl über die erste Antriebswelle 10 angetrieben.

In diesem ersten Betriebsbereich ist die steuerbare Kopplungseinrichtung 7 ausgekuppelt, und es erfolgt keine Drehmomentübertragung von der ersten Antriebswelle 10 auf die Fördereinrichtung 3.

Der Kopplungsantrieb 8 hat die steuerbare Kopplungseinrichtung 7 in diesem ersten Betriebsbereich ausgekuppelt. Beispielsweise ist der Kopplungsantrieb 8 ein Elektromagnet, welcher die steuerbare Kopplungseinrichtung 7 im mit Strom beaufschlagten Zustand elektromagnetisch gegen die Kraft eines Federspeichers auskuppelt. Im stromlosen Zustand ist die steuerbare Kopplungseinrichtung 7 dann ständig ohne elektrischen Energieaufwand durch den Federspeicher eingekuppelt.

Die zweite Antriebseinrichtung 6 der Fördereinrichtung 3 treibt in dem ersten Betriebsbereich als Elektromotor über die zweite Antriebswelle 11 das Förderrad 4 an, welches den Kühlmittelstrom 20 fördert. Da die steuerbare Kopplungseinrichtung 7 in diesem ersten Betriebsbereich ausgekuppelt ist, erfolgt der Antrieb des Förderrads 4 unabhängig von der ersten Antriebseinrichtung 5. Der Elektromotor der zweiten Antriebseinrichtung 6 ist so einstellbar, dass ein Betrieb einer mit dem Förderrad 4 gebildeten Kühlmittelpumpe anhand einer Betriebskennlinie in Abhängigkeit von der benötigten Kühlleistung ganz oder teilweise einstellbar ist, wobei eine Regelung einer Temperatur, zum Beispiel des Fahrzeugmotors oder der elektrischen Maschine, in deren unterschiedlichen Betriebszuständen möglich ist. Weiterhin kann bei ausgestelltem Motor des Fahrzeugs die Fördereinrichtung 3 durch die zweite Antriebseinrichtung 6 so lange weiter angetrieben werden, bis schädliche Restwärme der zu kühlenden Bauteile abgeführt ist.

In einem zweiten Betriebsbereich ist eine hohe Belastung der elektrischen Maschine und auch des Fahrzeugmotors vorhanden und somit eine erhöhte Kühlleistung erforderlich. In diesem zweiten Betriebsbereich ist zum Beispiel eine Erhöhung der Drehzahl der zweiten Antriebseinrichtung 6 durch deren Auslegung zur Erzielung eines größeren Kühlmittelstroms 20 nicht mehr möglich. Hierzu wird nun die Kopplungseinrichtung 7 durch den Kopplungsantrieb 8 eingekuppelt und auf diese Weise die zweite Antriebswelle 11 mit der ersten Antriebswelle 10 gekoppelt. Da die erste Antriebseinrichtung 5 in diesem zweiten Betriebsbereich und auch sonst eine höhere Drehzahl als die erste Antriebseinrichtung 6 liefert, ist ein größerer Kühlmittelstrom 20 durch die Fördereinrichtung 3 über das Förderrad 4 ermöglicht. Das Förderrad 4 bzw. die Betriebskennlinie der Fördereinrichtung 3 weist jedoch eine obere Grenzdrehzahl auf, die von der ersten Antriebseinrichtung 5 überstiegen wird. Aus diesem Grund ist das Getriebe 9 in den Kraftfluss zwischen erster Antriebswelle 10 und zweiter Antriebswelle 11 für eine Drehzahlanpassung, zum Beispiel eine Drehzahlreduzierung, eingebracht. Das Getriebe 9 kann zum Beispiel ein Planetengetriebe oder eine Ausführung mit besonders hoher Untersetzung auf kleinem Bauraum sein. Auch ein steuerbares Schaltgetriebe ist denkbar. Es steht jetzt eine wesentlich höhere Förderleistung der Fördereinrichtung 3 zur Verfügung, wobei auch der Druck des Kühlmittels erhöht ist. Dadurch wird vorteilhaft in dem zweiten Betriebsbereich ein hoher Kühlleistungsbedarf abgefangen.

Zur Steuerung der Schalt- und Einstellvorgänge des Kühlsystems 1 dient die Steuereinheit 23, welche im gezeigten Ausführungsbeispiel in der elektrischen Maschine 2 angeordnet ist. Die Steuereinheit 23 ist vorteilhaft mit einer Schnittstelle zu einer übergeordneten Steuerung des Fahrzeugs, zum Beispiel einem Motormanagement, versehen und steuert in Abhängigkeit von den Anforderung dieses Motormanagements die Förderleistung der Fördereinrichtung 4, indem sie beispielsweise im ersten Betriebsbereich die Drehzahl des Elektromotors der zweiten Antriebseinrichtung 6 entsprechend einstellt und den Kopplungsantrieb 8 zum Auskuppeln einschaltet. Im zweiten Betriebsbereich schaltet die Steuereinheit 23 den Kopplungsantrieb 8 und auch den Elektromotor der zweiten Antriebseinrichtung 6 der Fördereinrichtung 3 aus. So kann der Anker des Elektromotors der zweiten Antriebseinrichtung 6 frei drehen, ohne eine Bremswirkung zu erzeugen.

Die Steuereinheit 23 ist vorteilhaft auch als Steuerung der elektrischen Maschine 2 ausgelegt, wobei sie die üblichen Funktionen von Spannungsregelung des Bordnetzes und Laderegelung der Fahrzeugbatterie aufweisen kann.

Obwohl die vorliegende Erfindung anhand bevorzugter Ausführungsbeispiele vorstehend beschrieben wurde, ist sie darauf nicht beschränkt, sondern auf vielfältige Weise modifizierbar.

Das erfindungsgemäße Kühlsystem 1 ist auch vorteilhaft als Ersatz für eine Wasserpumpe des Fahrzeugmotorkühlsystems geeignet.

So ist es beispielsweise auch denkbar, dass die Steuereinheit 23 mit Temperatursensoren 26, 27, 28, 29 innerhalb des Kühlsystems 1 verbunden ist. Dadurch ist das Kühlsystem 1 vorteilhaft dazu ausgelegt, individuell Temperaturen der Baugruppen im Gehäuse 14 zusätzlich zum Fahrzeugkühlsystem zu regeln. So ist ein erster Temperatursensor 26 im Einlass 18 des Kühlmittelstroms angeordnet, welcher die Einlauftemperatur sensiert. Ist diese zu hoch, kann ein Signal für den Kühlerventilator zur Kühlung erzeugt werden. Ein zweiter Temperatursensor 27 erfasst die Temperatur der zweiten Antriebseinrichtung 6 und ein dritter Temperatursensor 24 die Temperatur der elektrischen Maschine 2. Hiermit kann zum Beispiel Restwärme dieser Baugruppen erfasst und dann abgeleitet werden. Ein vierter Temperatursensor 29 ist im Auslass 19 des Gehäuses 14 angeordnet, welcher die Auslauftemperatur des Kühlmittelstroms 20 erfasst und als Information an die Steuereinheit weiterleitet. Weniger oder mehr Temperatursensoren sind selbstverständlich möglich.

Im zweiten Betriebsbereich ist es weiterhin denkbar, dass der ausgeschaltete Elektromotor der zweiten Antriebseinrichtung 6 im Generatorbetrieb betrieben wird, was zum Beispiel von der Steuereinheit 23 steuerbar ist. Ein solcher Generatorbetrieb ist aber auch in allen Betriebsbereichen, zum Beispiel zur Energierückgewinnung im Schubbetrieb, denkbar. Dadurch wird es beispielsweise vorteilhaft ermöglicht, dass dieser Elektromotor als Generator zusätzliche Energie liefern kann. Weiterhin ist es auch denkbar, dass bei einem eventuellen Ausfall der elektrischen Maschine 2 als Generator dieser Elektromotor als Hilfsgenerator Notstrom erzeugt.

Die Kopplungseinrichtung 7 ist im stromlosen Zustand des Kopplungsantriebs 8 eingekuppelt. Dieses hat den zusätzlichen Vorteil, dass bei Ausfall der ersten Antriebseinrichtung 6 oder Ausfall des Kopplungsantriebs 8 immer ein Antrieb der Fördereinrichtung 3 zur Kühlleistung des Kühlsystems 1 sichergestellt ist.

Die elektrische Maschine 2 kann auch als ein Starter-Generator ausgebildet sein.

Es ist auch denkbar, dass die elektrische Maschine 2 ein Antriebsmotor eines Hybridmotors eines Fahrzeugs ist.

Weiterhin ist denkbar, dass mehr als eine Kopplungseinrichtung 7 vorgesehen werden kann.

Das Gehäuse 14 kann weitere Einlass- und/oder Auslassanschlüsse 31, 32 aufweisen, durch welche zum Beispiel eine zusätzliche Erwärmung oder Kühlung erfolgen kann. Beispielsweise kann darüber Restwärme in den Fahrzeugraum oder zu einem anderen Wärmetauscher abgeführt werden. Auch eine direkte Zuleitung oder Ableitung als Bypass bestimmter zu kühlender Baugruppen oder Wärmetauscher ist denkbar. Ein solcher zusätzlicher Einlass 31 und/oder Auslass 32 kann auch mit einem Thermostat 30 gesteuert ausgebildet und für einen Umgehungskreislauf des Kühlmittels direkt zum Fahrzeugmotor ohne Einbezug eines Wärmetauschers vorgesehen sein. Dies ist insbesondere in der Warmlaufphase des Fahrzeugmotors vorteilhaft, da auf diese Weise der Fahrzeugmotor seine Betriebstemperatur schnell erreicht. Wenn dieses erfolgt ist, kann der Thermostat 30 den zusätzlichen Einlass/Auslass 31, 32 wieder schließen. Das durch einen zusätzlichen Einlass 31 zugeführte Kühlmittel vermischt sich in dem Gehäuse 14 mit dem darin befindlichen Kühlmittel.

Die Steuereinheit 23 kann auch an einer anderen Stelle installiert oder Bestandteil der Motorsteuerung sein.

### Bezugszeichenliste

- 1: Kühlsystem
- 2: elektrische Maschine
- 3: Fördereinrichtung
- 4: Förderrad
- 5: erste Antriebseinrichtung
- 6: zweite Antriebseinrichtung
- 7: Kopplungseinrichtung
- 8: Kopplungsantrieb
- 9: Getriebe
- 10: erste Antriebswelle
- 11: zweite Antriebswelle
- 12: erste Wellenlager
- 13: zweite Wellenlager
- 14: Gehäuse
- 15: erstes Gehäuse
- 16: zweites Gehäuse
- 17: Kopplungsgehäuse
- 18: Einlass
- 19: Auslass
- 20: Kühlmittelstrom
- 21: Zufluss
- 22: Abfluss
- 23: Steuereinheit
- 24: erste Wicklung
- 25: zweite Wicklung
- 26: erster Temperatursensor
- 27: zweiter Temperatursensor
- 28: dritter Temperatursensor
- 29: vierter Temperatursensor
- 30: Thermostat
- 31: zusätzlicher Einlass
- 32: zusätzlicher Auslass

## Patentansprüche

1. Kühlsystem (1), insbesondere für ein Fahrzeug, mit:
zumindest einer elektrischen Maschine (2);
einer ersten Antriebseinrichtung (5) zum Antrieb der zumindest einen elektrischen Maschine (2);
einer Fördereinrichtung (3) welche einen Kühlmittelstrom (20) fördert, welcher zur Kühlung der zumindest einen elektrischen Maschine (2) vorgesehen ist; einer zweiten Antriebseinrichtung (6), welche die Fördereinrichtung (3) in einem ersten Betriebsbereich, in welchem die elektrische Maschine (2) mit einer für sie durchschnittlichen normalen Belastung arbeitet, antreibt; und
einer steuerbaren Kopplungseinrichtung (7) zur steuerbaren Kopplung der ersten Antriebseinrichtung (5) mit der Fördereinrichtung (3), wobei die steuerbare Kopplungseinrichtung (7) elektrisch steuerbar ausgebildet ist und einen Elektromagnet, welcher die steuerbare Kopplungseinrichtung (7) in mit Strom beaufschlagten Zustand elektromagnetisch gegen die Kraft eines Federspeichers in dem ersten Betriebsbereich auskuppelt, und
einen Federspeicher aufweist, der im stromlosen Zustand ständig ohne elektrischen Energieaufwand die steuerbare Kupplungseinrichtung (7) in dem zweiten Betriebsbereich eingekuppelt hält, wobei die erste Antriebseinrichtung (5) die Fördereinrichtung (3) in einem zweiten Betriebsbereich, in welchem eine hohe Belastung der elektrischen Maschine (2) und auch der ersten Antriebseinrichtung (5) vorhanden ist, antreibt.

2. Kühlsystem (1) nach Anspruch 1,
**dadurch gekennzeichnet,**
**dass** die zumindest eine elektrische Maschine (2), die Fördereinrichtung (3), die Kopplungseinrichtung (7) und
die zweite Antriebseinrichtung (6) für eine Umströmung mit dem Kühlmittelstrom (20) zu Kühlungszwecken in einem Gehäuse (14) mit zumindest einem Einlass (18) und einem Auslass (19) für den Kühlmittelstrom (20) angeordnet sind, wobei der Kühlmittelstrom (20) die Fördereinrichtung (3), die Kopplungseinrichtung (7) sowie die elektrische Maschine (2) umströmt.

3. Kühlsystem (1) nach Anspruch 2,
**dadurch gekennzeichnet,**
**dass** das Gehäuse (14) zumindest einen zusätzlichen Einlass (31) und zumindest einen zusätzlichen Auslass (32) für Kühlmittel aufweist.

4. Kühlsystem (1) nach Anspruch 3,
**dadurch gekennzeichnet,**
**dass** der zumindest eine zusätzliche Einlass (31) und/oder der zumindest eine zusätzliche Auslass (32) durch einen Thermostat (30) gesteuert ausgebildet sind.

5. Kühlsystem (1) nach wenigstens einem der vorhergehenden Ansprüche,
**dadurch gekennzeichnet,**
**dass** die steuerbare Kopplungseinrichtung (7) mit der ersten Antriebseinrichtung (5) über ein Getriebe (9) gekoppelt ist.

6. Kühlsystem (1) nach wenigstens einem der vorhergehenden Ansprüche,
**dadurch gekennzeichnet,**
**dass** die Fördereinrichtung (3) durch die zweite Antriebseinrichtung (6) im ersten Betriebsbereich zur Steuerung des Kühlmittelstroms (20) einstellbar ist.

7. Kühlsystem (1) nach wenigstens einem der vorhergehenden Ansprüche,
**dadurch gekennzeichnet,**
**dass** die zweite Antriebseinrichtung (6) im zweiten Betriebsbereich in einen deaktivierten Betriebszustand schaltbar ist.

8. Kühlsystem (1) nach wenigstens einem der vorhergehenden Ansprüche,
**dadurch gekennzeichnet,**
**dass** die zweite Antriebseinrichtung (6) im zweiten Betriebsbereich in einen Betriebszustand als Motor oder in einen Betriebszustand als Generator umschaltbar ist.

9. Kühlsystem (1) nach wenigstens einem der vorhergehenden Ansprüche,
**dadurch gekennzeichnet,**
**dass** das Kühlsystem (1) eine Steuereinheit (23) zur Steuerung der elektrischen Maschine (2), der Fördereinrichtung (3) und/oder der steuerbaren Kopplungseinrichtung (7) aufweist.

10. Kühlsystem (1) nach Anspruch 9,
**dadurch gekennzeichnet,**
**dass** die Steuereinheit (23) eine Schnittstelle zur Verbindung mit einer übergeordneten Steuereinrichtung eines Fahrzeugs, in welches das Kühlsystem (1) integriert ist, aufweist.

11. Kühlsystem (1) nach Anspruch 9 oder 10,
**dadurch gekennzeichnet,**
**dass** die Steuereinheit (23) in der elektrischen Maschine (2) angeordnet ist.

12. Kühlsystem (1) nach wenigstens einem der Ansprüche 9 bis 11 sowie Anspruch 2,
**dadurch gekennzeichnet,**
**dass** die Steuereinheit (23) mit Temperatursensoren (26, 27, 28, 29) in Verbindung steht, die im Einlass (18) sowie im Auslass (19) des Kühlmittelstroms (20), in der zumindest einen elektrischen Maschine (2) und/oder in der zweiten Antriebseinrichtung (6) angeordnet sind.

13. Kühlsystem (1) nach wenigstens einem der vorhergehenden Ansprüche,
**dadurch gekennzeichnet,**
**dass** das erste Wellenlager (12) einer ersten Antriebswelle (10) der zumindest einen elektrischen Maschine (2) und/oder das zweite Wellenlager (13) einer zweiten Antriebswelle (11) der Fördereinrichtung (3) für eine Umströmung mit dem Kühlmittelstrom (20) zu Kühlungszwecken vorgesehen ist.

14. Kühlsystem (1) nach wenigstens einem der Ansprüche 1 bis 9 oder 11 bis 13,
**dadurch gekennzeichnet,**
**dass** das Kühlsystem (1) Bestandteil eines Fahrzeugkühlsystems ist.

15. Kühlsystem (1) nach Anspruch 14,
**dadurch gekennzeichnet,**
**dass** die Fördereinrichtung (3) des Kühlsystems (1) als Fördereinrichtung des Fahrzeugkühlsystems ausgebildet ist.

16. Kühlsystem (1) nach wenigstens einem der vorhergehenden Ansprüche,
**dadurch gekennzeichnet,**
**dass** die elektrische Maschine (2) ein Generator ist, wobei die erste Antriebseinrichtung (5) der Motor, das heißt die Verbrennungskraftmaschine, des Fahrzeugs ist.

17. Kühlsystem (1) nach wenigstens einem der Ansprüche 1 bis 15, **dadurch gekennzeichnet, dass** die elektrische Maschine (2) ein Starter-Generator ist.

## Claims

1. Cooling system (1), in particular for a motor vehicle, comprising: at least one electrical machine (2); a first drive means (5) for driving the at least one electrical machine (2); a supply means (3) which supplies a coolant flow (20) provided to cool the at least one electrical machine (2); a second drive means (6) which drives the supply means (3) in a first operating range, in which the electrical machine (2) operates under an average load which is normal for said motor; and a controllable coupling means (7) for controllably coupling the first drive means (5) to the supply means (3), the controllable coupling means (7) being electrically controllable and comprising an electromagnet which electromagnetically releases the controllable coupling means (7) in its current-supplied state against the force of an accumulator in the first operating range, and comprising an accumulator which continuously keeps the controllable coupling means (7) engaged in the second operating range with no expenditure of electrical energy when not supplied with current, the first drive means (5) driving the supply means (3) in a second operating range, in which the electrical machine (2) and also the first drive means (5) are subjected to a high load.

2. Cooling system (1) according to claim 1, **characterised in that** the at least one electrical machine (2), the supply means (3), the coupling means (7) and the second drive means (6) are arranged in a housing (14) for circulation of the coolant flow (20) for cooling purposes, said housing comprising at least one inlet (18) and one outlet (19) for the coolant flow (20), the coolant flow (20) circulating around the supply means (3), the coupling means (7) and the electrical machine (2).

3. Cooling system (1) according to claim 2, **characterised in that** the housing (14) comprises at least one additional inlet (31) and at least one additional outlet (32) for a coolant.

4. Cooling system (1) according to claim 3, **characterised in that** the at least one additional inlet (31) and/or the at least one additional outlet (32) is/are controlled by a thermostat (30).

5. Cooling system (1) according to at least one of the preceding claims, **characterised in that** the controllable coupling means (7) is coupled to the first drive means (5) via a transmission (9).

6. Cooling system (1) according to at least one of the preceding claims, **characterised in that** the supply means (3) can be adjusted by the second drive means (6) in the first operating range so as to control the coolant flow (20).

7. Cooling system (1) according to at least one of the preceding claims, **characterised in that** the second drive means (6) can be switched in the second operating range into a deactivated operating mode.

8. Cooling system (1) according to at least one of the preceding claims, **characterised in that** the second drive means (6) can be switched in the second operating range into an operating mode as a motor or into an operating mode as a generator.

9. Cooling system (1) according to at least one of the preceding claims, **characterised in that** the cooling system (1) comprises a control means (23) for controlling the electrical machine (2), the supply means (3) and/or the controllable coupling means (7).

10. Cooling system (1) according to claim 9, **characterised in that** the control means (23) comprises an interface for connection to a superordinate control means of a motor vehicle into which the cooling system (1) is integrated.

11. Cooling system (1) according to either claim 9 or claim 10, **characterised in that** the control means (23) is arranged in the electrical machine (2).

12. Cooling system (1) according to at least one of claims 9 to 11 and claim 2, **characterised in that** the control means (23) is connected to temperature sensors (26, 27, 28, 29) which are arranged in both the inlet (18) and in the outlet (19) of the coolant flow (20), in the at least one electrical machine (2) and/or in the second drive means (6).

13. Cooling system (1) according to at least one of the preceding claims, **characterised in that** the first shaft bearing (12) of a first drive shaft (10) of the at least one electrical machine (2) and/or the second shaft bearing (13) of a second drive shaft (11) of the supply means (3) is/are provided so as to be circulated by the coolant flow (20) for cooling purposes.

14. Cooling system (1) according to at least one of claims 1 to 9 or 11 to 13, **characterised in that** the cooling system (1) is a component of a motor vehicle cooling system.

15. Cooling system (1) according to claim 14, **characterised in that** the supply means (3) of the cooling system (1) is configured as a supply means of the motor vehicle cooling system.

16. Cooling system (1) according to at least one of the preceding claims, **characterised in that** the electrical machine (2) is a generator, the first drive means (5) being the engine, i.e. the internal combustion engine, of the motor vehicle.

17. Cooling system (1) according to at least one of claims 1 to 15, **characterised in that** the electrical machine (2) is a starter generator.

## Revendications

1. Système de refroidissement (1), notamment pour un véhicule, avec :
- au moins une machine électrique (2) ;
- un premier dispositif d'entraînement (5) destiné à entraîner au moins une machine électrique (2) ;
- un dispositif de refoulement (3) refoulant un flux de réfrigérant (20) prévu pour refroidir au moins une machine électrique (2) ;
- un second dispositif d'entraînement (6), qui entraîne le dispositif de refoulement (3) dans une première plage de fonctionnement, dans laquelle la machine électrique (2) fonctionne avec une charge moyenne normale pour elle ; et
- un dispositif de couplage régulable (7) destiné au couplage régulable du premier dispositif d'entraînement (5) avec le dispositif de refoulement (3), le dispositif de couplage régulable (7) étant formé de manière régulable et présentant un électro-aimant, qui désaccouple de manière électromagnétique le dispositif de couplage régulable (7) à l'état alimenté en courant contre la force d'un accumulateur à ressort dans la première plage de fonctionnement, et un accumulateur à ressort, qui maintient le dispositif de couplage régulable (7) couplé à l'état non alimenté en permanence sans besoin d'énergie électrique dans la seconde plage de fonctionnement, le premier dispositif d'entraînement (5) entraînant le dispositif de refoulement (3) dans une seconde plage de fonctionnement, dans laquelle se trouve une forte charge de la machine électrique (2) ainsi que du premier dispositif d'entraînement (5).

2. Système de refroidissement (1) selon la revendication 1, **caractérisé par le fait qu'**au moins une machine électrique (2), le dispositif de refoulement (3), le dispositif de couplage (7) et le second dispositif d'entraînement (6) sont disposés pour un écoulement de contournement avec le flux de réfrigérant (20) à des fins de refroidissement dans un boîtier (14) avec au moins une admission (18) et un échappement (19) pour le flux de réfrigérant (20), le flux de réfrigérant (20) circulant en contournant le dispositif de refoulement (3), le dispositif de couplage (7) ainsi que la machine électrique (2).

3. Système de refroidissement (1) selon la revendication 2, **caractérisé par le fait que** le boîtier (14) présente au moins une admission supplémentaire (31) et au moins un échappement supplémentaire (32) pour moyen de refroidissement.

4. Système de refroidissement (1) selon la revendication 3, **caractérisé par le fait qu'**au moins une admission supplémentaire (31) et/ou au moins un échappement supplémentaire (32) se présente sous la forme régulée par un thermostat (30).

5. Système de refroidissement (1) selon au moins une des revendications précédentes, **caractérisé par le fait que** le premier dispositif de couplage régulable (7) est couplé au premier dispositif d'entraînement (5) par l'intermédiaire d'une transmission (9).

6. Système de refroidissement (1) selon au moins une des revendications précédentes, **caractérisé par le fait que** le dispositif de refoulement (3) est réglable par le second dispositif d'entraînement (6) dans la première plage de fonctionnement destinée à la régulation du flux de réfrigérant (20).

7. Système de refroidissement (1) selon au moins une des revendications précédentes, **caractérisé par le fait que** le second dispositif d'entraînement (6) est commutable dans la seconde plage de fonctionnement dans un état de fonctionnement désactivé.

8. Système de refroidissement (1) selon au moins une des revendications précédentes, **caractérisé par le fait que** le second dispositif d'entraînement (6) est commutable dans la seconde plage de fonctionnement dans un état de fonctionnement en tant que moteur ou dans un état de fonctionnement en tant que générateur.

9. Système de refroidissement (1) selon au moins une des revendications précédentes, **caractérisé par le fait que** le système de refroidissement (1) présente une unité de commande (23) destinée à commander la machine électrique (2), le dispositif de refoulement (3) et/ou le dispositif de couplage régulable (7).

10. Système de refroidissement (1) selon la revendication 9, **caractérisé par le fait que** l'unité de commande (23) présente une interface destinée au raccordement à un dispositif de commande subordonné d'un véhicule, dans lequel est intégré le système de refroidissement (1).

11. Système de refroidissement (1) selon la revendication 9 ou 10, **caractérisé par le fait que** l'unité de commande (23) est disposée dans la machine électrique (2).

12. Système de refroidissement (1) selon au moins une des revendications 9 à 11 ainsi que la revendication 2, **caractérisé par le fait que** l'unité de commande (23) est relié à des capteurs de température (26, 27, 28, 29) disposés dans l'admission (18) ainsi que dans l'échappement (19) du flux de réfrigérant (20), dans au moins une machine électrique (2) et/ou dans le second dispositif d'entraînement (6).

13. Système de refroidissement (1) selon au moins une des revendications précédentes, **caractérisé par le fait que** le premier palier d'arbre (12) d'un premier arbre moteur (10) d'au moins une machine électrique (2) et/ou le second palier d'arbre (13) d'un second arbre moteur (11) du dispositif de refoulement (3) est prévu pour un écoulement de contournement avec le flux de réfrigérant (20) à des fins de refroidissement.

14. Système de refroidissement (1) selon au moins une des revendications 1 à 9 ou 11 à 13, **caractérisé par le fait que** le système de refroidissement (1) est un élément constitutif d'un système de refroidissement de véhicule.

15. Système de refroidissement (1) selon la revendication 14, **caractérisé par le fait que** le dispositif de refoulement (3) du système de refroidissement (1) se présente sous la forme d'un dispositif de refoulement du système de refroidissement de véhicule.

16. Système de refroidissement (1) selon au moins une des revendications précédentes, **caractérisé par le fait que** la machine électrique (2) est un générateur, le premier dispositif d'entraînement (5) étant le moteur du véhicule, c'est-à-dire le moteur à combustion interne.

17. Système de refroidissement (1) selon au moins une des revendications 1 à 15, **caractérisé par le fait que** la machine électrique (2) est un générateur de démarrage.
